# FASCICULE DE BREVET EUROPEEN

(11) **EP 2 655 167 B1**
(45) Date de publication et mention de la délivrance du brevet: **17.06.2015**
(21) Numéro de dépôt: 11799799.9
(22) Date de dépôt: 30.11.2011
(51) Int. Cl.: B62D 25/04, B62D 25/16

(54) **DISPOSITIF DE RENFORT D'UNE AILE DE VEHICULE SUR UNE STRUCTURE DE CARROSSERIE**
VORRICHTUNG ZUR VERSTÄRKUNG DES FLÜGELS EINES FAHRZEUGS AUF EINER KAROSSERIE
DEVICE FOR STRENGTHENING THE WING OF A VEHICLE ON A BODYWORK STRUCTURE

(30) Priorité: 23.12.2010 FR 1061125
(43) Date de publication de la demande: 30.10.2013
(73) Titulaire: Peugeot Citroën Automobiles SA, 78140 Vélizy Villacoublay (FR)
(72) Inventeur: BRIAND, Sebastien, F-78120 Rambouillet (FR); GOURVENNEC, Thibault, F-91210 Draveil (FR)
(74) Mandataire: Fosse, Danièle
(86) Numéro de dépôt international: PCT/FR2011/052830
(87) Numéro de publication internationale: WO 2012/085380

(56) Documents cités:
- DE-A1- 10 042 087
- DE-A1- 10 328 455
- FR-A1- 2 833 320
- US-A- 1 624 860
- US-A- 5 297 845
- US-A1- 2006 001 293

## Description

L'invention se rapporte à un dispositif de renfort pour améliorer la résistance au choc à basse vitesse, dit choc réparabilité d'une aile de véhicule automobile. Le document US 2006/0001293 décrit un ensemble selon le préambule de la revendication 1.

Elle concerne aussi un véhicule automobile dont les ailes et, plus particulièrement les ailes avant, sont équipées d'un tel dispositif.

La conception d'un véhicule automobile doit aujourd'hui répondre à de nombreuses réglementations et doit subir des procédures d'essai, notamment des essais de chocs frontaux à basse vitesse contre des murs dits chocs réparabilité.

Les dégâts occasionnés par ces chocs se situent non seulement sur le pare-chocs et les ailes avant du véhicule, mais peuvent aussi atteindre la porte du véhicule.

En effet, au cours d'un choc, le mur vient impacter les projecteurs et le pare-chocs, lesquels dans leur mouvement, viennent charger l'aile en partie avant, ce qui entraîne un recul de l'aile qui finit à son tour par déborder sur la porte.

Dans certains pays, les compagnies d'assurances augmentent le coût de l'assurance en fonction du nombre de pièces impactées par les chocs.

Il est donc nécessaire de proposer des solutions pour réduire substantiellement le recul de l'aile pour ne pas impacter la porte.

Des solutions techniques ont déjà été envisagées pour améliorer la rigidité d'une aile de véhicule.

De façon générale, on connaît des véhicules automobiles dans lesquels on met en place des renforts entre l'aile avant et le pied avant sur lequel est monté la porte.

A titre d'exemple d'illustration, le document FR 2 931 786 décrit un dispositif pour améliorer la rigidité et la résistance au choc d'une aile avant de véhicule automobile, qui est constitué par une entretoise fixée, d'une part, à l'aile avant et au pare-boue du véhicule et, d'autre part, au côté d'habitacle du véhicule, de façon à permettre une plus grande résistance au choc de l'aile avant.

A titre d'exemple également, le document FR 2 940 956 propose un dispositif de renforcement servant à limiter le recul de l'aile en cas de choc réparabilité qui comprend un tirant reliant faite à une doublure d'aile correspondante.

Quelle que soit la solution retenue, un problème récurrent dans la mise en place de renfort entre une aile avant et un pied avant réside dans la déformation possible de l'aile lors du montage du renfort entre les deux éléments.

Plus précisément, on constate que la surface sur laquelle repose le pied avant peut s'ouvrir de quelques degrés.

Cette ouverture, lors de la mise en place d'un renfort entre l'aile avant et le pied avant, génère un décalage au droit de la fixation du renfort en zone d'aile.

L'aile étant très souple, ce décalage entraîne une déformation de l'aile avant et des désaffleurements non négligeables avec les éléments adjacents à l'aile tels que le projecteur et la porte correspondants.

La qualité de la mise en géométrie générale de l'aile avant est moindre.

Par ailleurs, on constate également, des dispersions géométriques dans la position relative de l'aile et du pied avant.

Ces dispersions peuvent avoir comme conséquence, également, une déformation de l'aile.

Cela dégrade, également, la mise en géométrie générale de l'aile par rapport à la porte et au projecteur correspondants.

Ainsi, un but de la présente invention est de proposer un dispositif de renfort liant une aile avant de véhicule automobile et un pied avant, remédiant aux inconvénients susmentionnés.

Un autre but de la présente invention est de proposer un dispositif de renfort liant rigidement une aile avant de véhicule automobile et un pied avant sans impacter la géométrie de l'aile.

Il est également désirable de proposer un dispositif de renfort permettant de limiter le recul de l'aile avant lors d'un choc réparabilité.

Un autre but de la présente invention est de proposer un dispositif de renfort entre l'aile avant et le pied avant, de réalisation et de montage simples.

A cet effet, on prévoit selon l'invention un ensemble comprenant un pied avant de véhicule automobile, un élément de carrosserie dudit véhicule automobile destiné à être monté sur ledit pied avant et un dispositif de renfort entre ledit élément de carrosserie et le pied avant comprenant un profilé de renfort destiné à être monté respectivement sur l'élément de carrosserie et le pied avant, le pied avant présentant une face d'appui adaptée pour coopérer avec le profilé, cette face d'appui s'étendant longitudinalement selon un axe longitudinal.

Cet ensemble est remarquable en ce que le dispositif de renfort comprend, en outre, un système de réglage de la position du profilé de renfort relativement à l'élément de carrosserie et au pied avant, ce système comprenant au moins des moyens adaptés pour translater le profilé de renfort selon ledit axe longitudinal du pied avant.

Ce système de réglage permet avantageusement de s'adapter aux dispersions géométriques de l'élément de carrosserie et/ou du pied avant.

On limite ainsi la déformation de l'élément de carrosserie et tout désaffleurement avec ses éléments adjacents dus au montage du profilé de renfort entre l'élément de carrosserie et le pied avant.

Selon des modes particuliers de réalisation de l'invention, l'ensemble peut comprendre une ou plusieurs des caractéristiques suivantes, prises isolément ou en combinaison techniquement possibles :
- le système de réglage de la position du profilé de renfort relativement à l'élément de carrosserie et au pied avant comprend, en outre, des moyens adaptés pour autoriser une rotation du profilé de renfort selon ledit axe ;
- les moyens adaptés pour autoriser une rotation du profilé de renfort selon ledit axe comprennent un support de renfort destiné à être monté sur le pied avant au droit du profilé, le profilé et le support de renfort présentant une interface de forme cylindrique ;
- le profilé de renfort est en prise avec le support de renfort ;
- les moyens adaptés pour translater le profilé de renfort selon l'axe longitudinal du pied avant comprennent au moins une glissière de réglage, s'étendant le long dudit axe, ménagée sur le profilé, et un goujon adapté pour coopérer avec la glissière, ledit goujon étant monté sur le pied avant ;
- ladite glissière de réglage est de forme et de dimensions adaptées pour présenter un jeu axial selon un axe perpendiculaire audit axe longitudinal après avoir reçu ledit goujon ;
- le dispositif de renfort comprend, en outre, une glissière de guidage s'étendant dans un plan comprenant ledit axe longitudinal et débouchant dans la glissière de réglage ;
- le dispositif de renfort comprend, en outre, des moyens d'indexage du profilé de renfort sur l'élément de carrosserie, lesdits moyens d'indexage comprenant un orifice d'indexage et une boutonnière montés, respectivement, sur l'élément de carrosserie et sur le profilé de renfort ou inversement, ladite boutonnière et ledit orifice étant adaptés pour coïncider ;
- le dispositif de renfort comprend, en outre, des moyens d'encliquetage destinés à coopérer avec la boutonnière et l'orifice d'indexage.

L'invention a également pour objet un véhicule automobile comprenant un ensemble conforme à celui décrit ci-dessus, dans lequel l'élément de carrosserie peut être une aile avant dudit véhicule adaptée pour être montée sur un côté de caisse du pied avant.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :
- la figure 1 représente une vue en perspective de l'intérieur d'une aile avant de véhicule automobile montée sur un pied avant par l'intermédiaire d'un dispositif de renfort selon un mode de réalisation de la présente invention ;
- la figure 2 représente une vue en perspective du dispositif de renfort de la figure 1 monté sur l'aile avant et le pied avant du véhicule automobile ;
- les figures 3a et 3b sont des vues en coupe du dispositif de renfort de la figure 2 respectivement avant et après déplacement de ce dernier relativement au pied avant.

Sur l'ensemble des figures, on définit un système d'axes X, Y, Z attaché au véhicule automobile. De façon conventionnelle, l'axe X représente l'axe longitudinal de roulement du véhicule, l'axe Y représente l'axe transversal du véhicule, et l'axe Z représente l'axe vertical du véhicule.

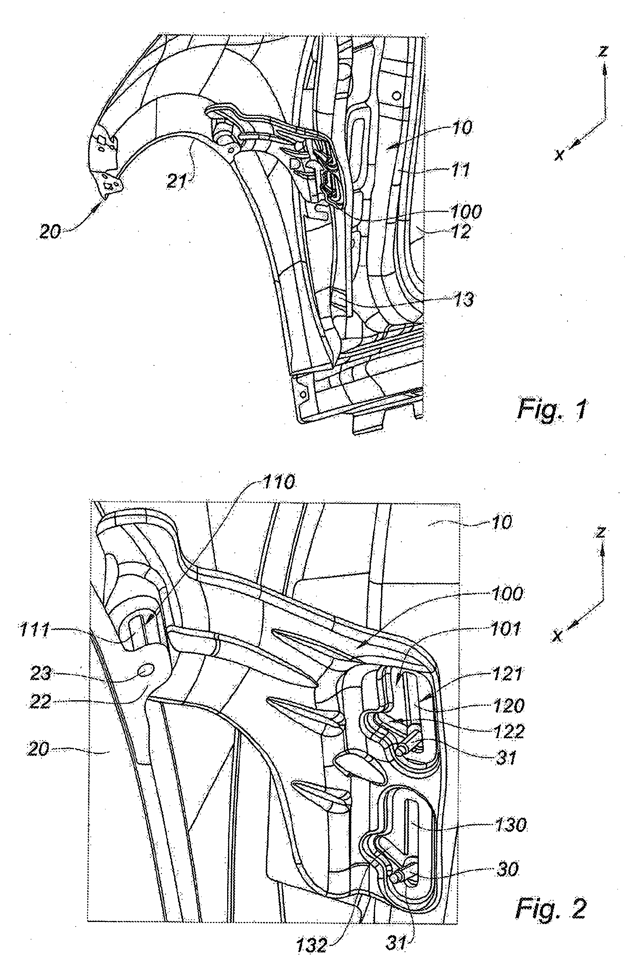

On a représenté schématiquement, sur la figure 1, une partie d'une aile avant d'un véhicule automobile, désignée dans son ensemble par la référence 20 et qui comporte, de manière classique, un bord inférieur 21 présentant un profil circulaire destiné à épouser celui d'une roue.

L'aile est, de préférence, constituée intégralement en matière plastique.

Cette aile 20 est montée sur un côté de caisse 10 correspondant d'une carrosserie de véhicule. Ce côté de caisse 10 appartient à un pied avant 11 supportant la porte avant 12 correspondante à l'aile avant 20.

Par ailleurs, cette aile avant 20 est montée, également, sur sa face interne, sur un dispositif de renfort. Ce dispositif de renfort comprend un profilé de renfort désigné par la référence générale 100, qui est fixé rigidement respectivement à l'aile avant 20 et au côté de caisse 10, au niveau du passage de roue 21.

Le côté de caisse 10 présente une face d'appui 13 adaptée pour coopérer avec le profilé de renfort 100, cette face d'appui 13 s'étendant longitudinalement selon Z ou un axe sensiblement parallèle à l'axe Z, dans des exemples non limitatifs de la présente invention.

Pour simplifier la description de la présente invention, on considère que la face d'appui 13 s'étend longitudinalement selon Z. Toutes les orientations qui seront définies par la suite le seront au regard du système orthonormé correspondant, tel que précisé au début de la description.

Concernant le profilé de renfort 100, ce dernier est adapté pour limiter le le recul de l'aile avant 20 sur la porte avant 12 lors d'un choc. Il lie ainsi rigidement l'aile avant 20 au côté de caisse 10.

Ce profilé de renfort 100 est formé d'un matériau approprié pour rigidifier l'interface entre l'aile avant 20 et le côté de caisse 10.

Ce profilé de renfort 100 présente une forme de section générale en L inversé, adaptée aux formes et dimensions de l'aile avant 20 et de la face d'appui 13 du côté de caisse 10 qu'il vient relier.

Pour compenser les défauts de fabrication de l'aile avant 20 et du côté de caisse 10, le dispositif de renfort comprend un système de réglage de la position du profilé de renfort 100 relativement à l'aile avant 20 et à la face d'appui 13 du côté de caisse 10.

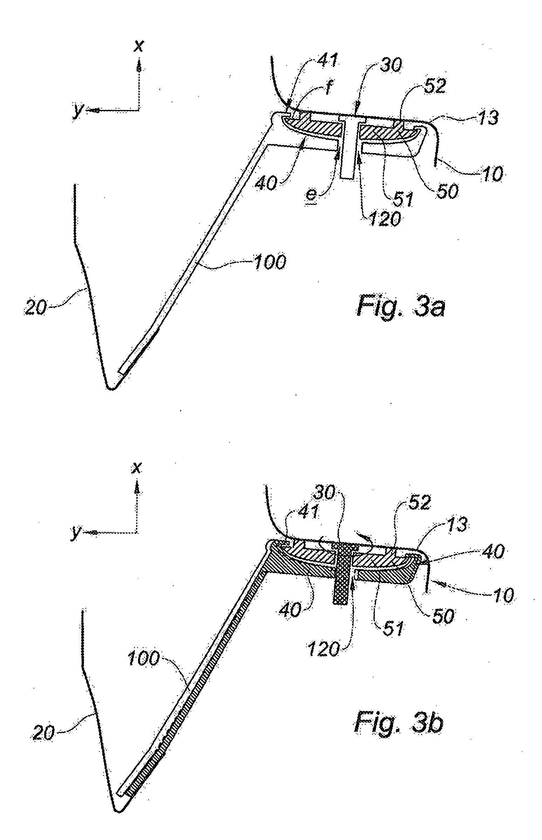

Ce système qui sera décrit plus loin en relation avec les figures 2, 3a et 3b comprend des moyens adaptés pour translater le profilé de renfort 100 selon Z et des moyens adaptés pour autoriser une rotation du profilé de renfort 100 selon Z.

Ce système de réglage assure le montage et le positionnement du profilé de renfort 100 selon les trois axes X, Y, Z relativement au côté de caisse 10 et à l'aile avant 20 sans modifier la position relative de ces deux éléments.

En référence plus particulièrement à la figure 2, les moyens adaptés pour translater le profilé de renfort 100 selon Z comprennent au moins une glissière de réglage 120, s'étendant le long de Z, ménagée sur le profilé 100.

Plus précisément, sur la branche du L du profilé de renfort 100 destiné à reposer sur la face d'appui 13 du côté de caisse 20 est ménagée au moins une lumière 121 traversante de forme oblongue s'étendant longitudinalement selon Z.

Un organe de fixation de type goujon 30 comprenant une tête solidaire de la face d'appui 13 et une tige 31 adaptée pour s'insérer dans la lumière 121 est également prévu.

La glissière de réglage 120 autorise un degré de liberté dans la direction principale du bord latéral arrière de l'aile 20 et l'insertion du goujon 30 à travers la glissière 120 règle; ainsi, la position du profilé de renfort 100 selon l'axe Z.

La longueur de la glissière 120 est, de plus, adaptée pour répondre aux degrés de défaut d'ouverture du côté de caisse 20, comme on le verra plus loin en lien avec le procédé de montage du renfort sur l'aile avant 20 et le côté de caisse 10.

Comme illustré sur la figure 2, le dispositif de renfort comprend, en outre, une glissière de guidage 122 s'étendant dans le plan XZ.

Cette glissière 122 est une lumière oblongue débouchant à l'extrémité inférieure de la lumière oblongue 121 de réglage.

Cette glissière 122 est adaptée pour définir un dégagement selon XZ permettant de monter le profilé de renfort 100 entre l'aile avant 20 et le côté de caisse 10 avant son réglage en position.

Dans la variante de réalisation non limitative illustrée sur la figure 2, le dispositif de renfort comprend deux glissières de réglage 120,130 et deux glissières de guidage 122,132 correspondantes.

Les moyens adaptés pour autoriser une rotation du profilé de renfort 100 selon l'axe Z sont, quant à eux, illustrés sur les figures 3a et 3b.

Ils comprennent, en premier lieu, un support de renfort 50 monté de façon solidaire sur la face d'appui 13 du côté de caisse 20 au droit du profilé de renfort 100 et des glissières de réglage 120, entre le profilé de renfort 100 et la face d'appui 13.

Dans un exemple non limitatif, le support 50 est fixé à la face d'appui 13 par l'intermédiaire de plusieurs pattes de fixation 52 adaptées.

Le profilé de renfort 100 et le support 50 présentent une interface de forme cylindrique, ceci afin d'autoriser un mouvement de rotation du profilé de renfort 100 relativement au support de renfort 50.

Plus précisément, la branche du L du profilé de renfort 100 comprend sur sa face interne en regard de la face d'appui 13 et du support 50 un embouti 40 de section cylindrique dont la concavité est tournée vers la face d'appui 13.

Chaque glissière de guidage 120 est ménagée dans cet embouti 40.

Le support de renfort 50 présente une périphérie externe 51 en regard du profilé de renfort 100 dont la forme est conjuguée à la partie cylindrique du profilé de renfort 100, ceci afin de venir loger le support de renfort 50 dans la concavité de l'embouti 40 du profilé 100.

De plus, le profilé de renfort 100 est en prise avec le support de renfort 50.

Dans une variante de réalisation, on propose, ainsi, deux retours 41 à la périphérie de l'embouti 40 formant crochets adaptés pour maintenir le support de renfort 50 en prise avec le profilé 100.

Ces retours 41 viennent reposer sur la face interne du support 50, face en regard de la face d'appui 13 du côte de caisse 10.

Avantageusement, cela permet de former un ensemble unique en bord de ligne.

Par ailleurs, afin de permettre une rotation du profilé de renfort 100 relativement au support de renfort 50, des jeux axiaux sont prévus entre le support de renfort 50 et le profilé 100 et entre les glissières de réglage 120,130 et les goujons de fixation 30.

Ainsi, chaque lumière de guidage 121 possède une largeur selon l'axe Y adaptée pour définir un jeu axial e à la périphérie du goujon 30 lorsque celui-ci est inséré dans la lumière de guidage 121.

De plus, les dimensions de l'embouti 40 et du support 50 sont adaptées pour définir un jeu axial f selon X entre la périphérie interne de l'embouti 40 et le support de renfort 50 lorsque ce dernier est en prise dans la concavité de l'embouti 40.

Par ailleurs, la fixation du profilé de renfort 100 sur l'aile avant 20 est illustrée sur la figure 2.

Le dispositif de renfort comprend, ainsi, des moyens d'indexage 110 du profilé de renfort 100 sur l'aile avant 20,.

Ces moyens d'indexage comprennent une boutonnière 111 de type glissière associée à un oeillet d'indexage 23 montés, respectivement, sur l'aile avant 20 et sur le profilé de renfort 100 ou inversement.

Plus précisément, comme illustré sur la figure 2, la branche du L du profilé en regard de l'aile 20 comprend à son extrémité libre, une boutonnière 111 présentant une lumière oblongue s'étendant dans un plan XZ.

Cette boutonnière 111 est adaptée pour coopérer avec l'orifice d'indexage 23 afin de mettre en position le profilé de renfort 100 par rapport à l'aile avant 20 et, plus particulièrement, son accostage sur l'aile avant 20 dans le plan XZ en faisant coincider la boutonnière et l'orifice.

Concernant l'orifice d'indexage23, ce dernier est supporté par une patte 22 en saillie du passage de roue 21 vers l'intérieur de l'aile 20.

Cett patte de fixation 22, de forme sensiblement rectangulaire s'étend en regard de la boutonnière 111.

Cette patte de fixation 22 peut être venue de matière ou non avec l'aile avant 20.

De plus, il convient de noter que la longueur de la branche du profilé de renfort 100 portant la boutonnière 111 à son extrémité est adaptée pour éviter tout désaffleurement de l'aile avant 20 avec les éléments qui lui sont adjacents.

Par ailleurs, le profilé de renfort 100 devant lier rigidement l'aile avant 20 et le côté de caisse, des moyens de serrage en position du profilé de renfort 100 lorsque le renfort 100 a été correctement mis en position relativement à l'aile 20 et au côté de caisse 10 sont prévus.

Ainsi, des moyens d'encliquetage formant doigt d'indexage traversant la boutonnière 111 et l'orifice d'indexage 23 sont prévus pour maintenir en position le profilé de renfort 100 relativement à l'aile 20 lorsque la boutonnière 111 et l'orifice d'indexage 23 sont en regard.

De plus, dans une variante de réalisation non limitative, des écrous à rattrapage d'angle sont prévus pour coopérer avec les goujons 30 du côté de caisse 10 et pour fixer rigidement en position le profilé de renfort 100 relativement au côté de caisse 10.

Le procédé de montage du dispositif de renfort qui vient d'être décrit est le suivant.

En premier lieu, on positionne le profilé de renfort 100 sur le côté de caisse 20. Pour cela, on introduit les goujons 30 à l'extrémité libre des glissières de guidage 122.

On translate ensuite dans le plan XZ le profilé de renfort 100 afin qu'il soit positionné le plus haut possible dans les glissières de réglage 120,130.

Cette position correspond à une position des goujons 30 au croisement des glissières de guidage 122 et des glissières de réglage 120,130.

Dans une étape suivante, on amène le profilé de renfort 100 près de l'aile avant 20. Pour cela, l'opérateur fait tourner le profilé 100 selon l'axe Z pour qu'il soit au contact de la paroi interne de l'aile avant 20.

Il translate ensuite le profilé de renfort 100 le long des glissières de réglage selon Z de sorte que la boutonnière 111 vienne correspondre avec l'orifice d'indexage 23 de l'aile avant 20.

La position relative du profilé de renfort 100 relativement à l'aile avant 20 étant définie, le profilé de renfort est arrêté en position de façon définitive en étant fixé rigidement à l'aile avant 20 grâce aux moyens d'encliquetage traversant l'orifice d'indexage 23 et la boutonnière 111.

Le positionnement en Z du profilé étant arrêté, on fixe rigidement le profilé de renfort 100 relativement au côté de caisse 10 grace aux moyens de serrage adaptés coopérant avec les goujons 30.

A ce stade, le profilé de renfort 100 est lié rigidement à l'aile avant 20 et au côté de caisse 10.

Dans une variante de réalisation du mode de réalisation de la présente invention qui vient d'être décrit, on peut proposer de simplifier le système de réglage de la position relative du profilé de renfort 100 relativement à l'élément de carrosserie 20 et au pied avant en supprimant les moyens adaptés pour autoriser la rotation du profilé de renfort 100 selon l'axe longitudinal du pied avant.

Avantageusement, quelque soit le mode de réalisation envisagé, le système de réglage de la position du profilé de renfort 100 permet de répondre aux contraintes géométriques de l'aile avant 20 et du côté de caisse 10.

La boutonnière en XZ, les glissières de réglage en Z et le degré de liberté en rotation selon Z du profilé 100 relativement au côté de caisse 10 participent à la récupération des dispersions géométriques d'ouverture du côté de caisse 10 et de position de l'aile avant relativement au côté de caisse 10 selon XZ.

Par ailleurs, le degré de liberté en rotation selon Z du profilé 100 et les jeux axiaux e et f associés permettent notamment de récupérer les dispersions géométriques de position de l'aile 20 relativement au côte de caisse 10 selon Y.

Ainsi, la fixation d'un dispositif de renfort avec système de réglage en position du profilé de renfort 100 sur l'aile avant 20 et sur le coté de caisse 10 permet d'améliorer le contrôle des dispersions géométriques entre l'aile 10 et le côté de caisse 10.

L'homme de l'art appréciera, par rapport aux véhicules automobiles de l'art antérieur, un véhicule offrant la possibilité de concilier les exigences relatives à la protection des individus contre les chocs, notamment le choc réparabilité, et celles relatives à la mise en géométrie générale de l'aile avant 20 relativement à ses éléments adjacents et au côté de caisse 10 sur lequel est elle montée.

En effet, la présence du profilé de renfort 100 permet de maîtriser le recul de l'aile avant 20 lors d'un choc et, par conséquent, d'entraîner un impact minimal au niveau de la porte du véhicule.

De plus, le montage du profilé de renfort 100 n'a pas d'incidence sur la position relative prévue entre l'aile avant 20 et le côté de caisse 10.

## Revendications

1. Ensemble comprenant un pied avant de véhicule automobile, un élément de carrosserie (20) dudit véhicule automobile destiné à être monté sur ledit pied avant et un dispositif de renfort entre ledit élément de carrosserie (20) et le pied avant comprenant un profilé de renfort (100) destiné à être monté respectivement sur l'élément de carrosserie (20) et le pied avant, le pied avant présentant une face d'appui (13) adaptée pour coopérer avec ledit profilé (100), cette face d'appui (13) s'étendant longitudinalement selon un axe longitudinal, **caractérisé en ce que** le dispositif de renfort comprend, en outre, un système de réglage de la position du profilé de renfort (100) relativement à l'élément de carrosserie (20) et au pied avant, ce système comprenant au moins des moyens (120, 130) adaptés pour translater le profilé de renfort (100) selon ledit axe longitudinal du pied avant.

2. Ensemble selon la revendication 1, **caractérisé en ce que** le système de réglage de la position du profilé de renfort (100) relativement à l'élément de carrosserie (20) et au pied avant comprend, en outre, des moyens (50, 120,130) adaptés pour autoriser une rotation du profilé de renfort (100) selon ledit axe.

3. Ensemble selon la revendication 2, **caractérisé en ce que** les moyens (50, 120,130) adaptés pour autoriser une rotation du profilé de renfort (100) selon ledit axe comprennent un support de renfort (50) destiné à être monté sur le pied avant au droit du profilé (100), le profilé (100) et le support de renfort (50) présentant une interface de forme cylindrique.

4. Ensemble selon la revendication 3 **caractérisé en ce que** le profilé de renfort (100) est en prise avec le support de renfort (50).

5. Ensemble selon l'une des revendications 1 à 4, **caractérisé en ce que** les moyens (120,130) adaptés pour translater le profilé de renfort (100) selon l'axe longitudinal du pied avant comprennent au moins une glissière de réglage (120), s'étendant le long dudit axe, ménagée sur le profilé (100), et un goujon (30) adapté pour coopérer avec la glissière (120), ledit goujon (30) étant monté sur le pied avant.

6. Ensemble selon la revendication 5, **caractérisé en ce que** ladite glissière de réglage (120) est de forme et de dimensions adaptées pour présenter un jeu axial (e) selon un axe perpendiculaire audit axe longitudinal après avoir reçu ledit goujon (30).

7. Ensemble selon l'une des revendications 1 à 6, **caractérisé en ce que** dispositif de renfort comprend, en outre, une glissière de guidage (122) s'étendant dans un plan comprenant ledit axe longitudinal et débouchant dans la glissière de réglage (120).

8. Ensemble selon l'une des revendications 1 à 7, **caractérisé en ce que** le dispositif de renfort comprend, en outre, des moyens d'indexage (111) du profilé de renfort (100) sur l'élément de carrosserie (20), lesdits moyens d'indexage comprenant un orifice d'indexage et une boutonnière (111) montés, respectivement, sur l'élément de carrosserie (20) et sur le profilé de renfort (100) ou inversement, ladite boutonnière et ledit orifice étant adaptés pour coïncider.

9. Ensemble selon la revendication 8 **caractérisé en ce que** le dispositif de renfort comprend, en outre, des moyens d'encliquetage destinés à coopérer avec la boutonnière (111) et l'orifice d'indexage (23).

10. Véhicule automobile comprenant un ensemble selon l'une des revendications 1 à 9.

11. Véhicule selon la revendication 9 **caractérisé en ce que** l'élément de carrosserie (20) est une aile avant dudit véhicule adaptée pour être montée sur un côté de caisse (10) du pied avant.

## Patentansprüche

1. Baugruppe, die einen vorderen Kraftfahrzeugständer, ein Karosserieelement (20) des Kraftfahrzeugs, das dazu bestimmt ist, auf den vorderen Ständer montiert zu werden, und eine Verstärkungsvorrichtung zwischen dem Karosserieelement (20) und dem vorderen Ständer umfasst, die ein Verstärkungsprofil (100) umfasst, das dazu bestimmt ist, jeweils auf das Karosserieelement (20) und den vorderen Ständer montiert zu sein, wobei der vordere Ständer eine Auflagefläche (13) aufweist, die angepasst ist, um mit dem Profil (100) zusammenzuwirken, wobei sich diese Auflagefläche (13) längs entlang einer Längsachse erstreckt, **dadurch gekennzeichnet, dass** die Verstärkungsvorrichtung außerdem ein Einstellsystem der Position des Verstärkungsprofils (100) in Bezug auf das Karosserieelement (20) und den vorderen Ständer umfasst, wobei dieses System mindestens Mittel (120, 130) umfasst, die geeignet sind, um das Verstärkungsprofil (100) entlang der Längsachse des vorderen Ständers zu verschieben.

2. Baugruppe nach Anspruch 1, **dadurch gekennzeichnet, dass** das Einstellsystem der Position des Verstärkungsprofils (100) in Bezug auf das Karosserieelement (20) und den vorderen Ständer außerdem Mittel (50, 120, 130) umfasst, die angepasst sind, um eine Drehung des Verstärkungsprofils (100) gemäß der Achse zu erlauben.

3. Baugruppe nach Anspruch 2, **dadurch gekennzeichnet, dass** die Mittel (50, 120, 130), die angepasst sind, um eine Drehung des Verstärkungsprofils (100) entlang der Achse erlauben, einen Verstärkungsträger (50) umfassen, der dazu bestimmt ist, auf den vorderen Ständer im rechten Winkel zu dem Profil (100) montiert zu werden, wobei das Profil (100) und der Verstärkungsständer (50) eine Schnittstelle mit zylindrischer Form aufweisen.

4. Baugruppe nach Anspruch 3, **dadurch gekennzeichnet, dass** das Verstärkungsprofil (100) in den Verstärkungsträger (50) eingreift.

5. Baugruppe nach einem der Ansprüche 1 bis 4, **dadurch gekennzeichnet, dass** die Mittel (120, 130), die angepasst sind, um das Verstärkungsprofil (100) entlang der Längsachse des vorderen Ständers zu verschieben, mindestens eine Einstellgleitschiene (120) umfassen, die sich entlang der Achse erstreckt, die auf dem Profil (100) eingerichtet ist, und einen Stift (30), der angepasst ist, um mit der Gleitschiene (120) zusammenzuwirken, wobei der Stift (30) auf den vorderen Ständer montiert ist.

6. Baugruppe nach Anspruch 5, **dadurch gekennzeichnet, dass** die Einstellgleitschiene (120) eine Form und Maße hat, die angepasst sind, um ein axiales Spiel (e) entlang einer Achse senkrecht zu der Längsachse aufzuweisen, nachdem der Stift (30) aufgenommen wurde.

7. Baugruppe nach einem der Ansprüche 1 bis 6, **dadurch gekennzeichnet, dass** die Verstärkungsvorrichtung außerdem eine Führungsgleitschiene (122) umfasst, die sich in einer Ebene erstreckt, die die Längsachse umfasst und in die Einstellgleitschiene (120) mündet.

8. Baugruppe nach einem der Ansprüche 1 bis 7, **dadurch gekennzeichnet, dass** die Verstärkungsvorrichtung außerdem Positionierungsmittel (111) des Verstärkungsprofils (100) auf dem Karosserieelement (20) umfasst, wobei die Positionierungsmittel eine Positionierungsöffnung und eine längliche Aussparung (111) umfassen, die jeweils auf das Karosserieelement (20) und auf das Verstärkungsprofil (100) oder umgekehrt montiert sind, wobei die längliche Aussparung und die Öffnung angepasst sind, um miteinander übereinzustimmen.

9. Baugruppe nach Anspruch 8, **dadurch gekennzeichnet, dass** die Verstärkungsvorrichtung außerdem Einrastmittel umfasst, die dazu bestimmt sind, mit der länglichen Aussparung (111) und der Positionierungsöffnung (23) zusammenzuwirken.

10. Kraftfahrzeug, das eine Baugruppe nach einem der Ansprüche 1 bis 9 umfasst.

11. Fahrzeug nach Anspruch 9, **dadurch gekennzeichnet, dass** das Karosserieelement (20) ein vorderer Flügel des Fahrzeugs ist, der angepasst ist, um auf eine Karosserieseite (10) des vorderen Ständers montiert zu sein.

## Claims

1. An assembly including a front hinge pillar of a motor vehicle, a bodywork element (20) of said motor vehicle intended to be mounted on said front hinge pillar and a reinforcing device between said bodywork element (20) and the front hinge pillar including a reinforcing section (100) intended to be mounted respectively on the bodywork element (20) and the front hinge pillar, the front hinge pillar having a bearing face (13) designed to collaborate with said section (100), this bearing face (13) running longitudinally along a longitudinal axis, **characterized in that** the reinforcing device further includes a system for adjusting the position of the reinforcing section (100) relative to the bodywork element (20) and to the front hinge pillar, this system including at least means (120, 130) designed to bring about a translational movement of the reinforcing section (100) along said longitudinal axis of the front hinge pillar.

2. The assembly according to Claim 1, **characterized in that** the system for adjusting the position of the reinforcing section (100) relative to the bodywork element (20) and to the front hinge pillar further includes means (50, 120, 130) designed to permit a rotation of the reinforcing section (100) along said axis.

3. The assembly according to Claim 2, **characterized in that** the means (50, 120, 130) designed to permit a rotation of the reinforcing section (100) along said axis include a reinforcing support (50) intended to be mounted on the front hinge pillar perpendicular to the section (100), the section (100) and the reinforcing support (50) having an interface of cylindrical shape.

4. The assembly according to Claim 3, **characterized in that** the reinforcing section (100) is engaged with the reinforcing support (50).

5. The assembly according to one of Claims 1 to 4, **characterized in that** the means (120, 130) designed to bring about a translational movement of the reinforcing section (100) along the longitudinal axis of the front hinge pillar include at least one adjusting slide (120), extending along said axis, arranged on the section (100), and a pin (30) designed to collaborate with the slide (120), said pin (30) being mounted on the front hinge pillar.

6. The assembly according to Claim 5, **characterized in that** said adjusting slide (120) is of a shape and dimensions designed to present an axial play (e) along an axis perpendicular to said longitudinal axis after having received said pin (30).

7. The assembly according to one of Claims 1 to 6, **characterized in that** the reinforcing device further includes a guiding slide (122) extending in a plane including said longitudinal axis and leading into the adjusting slide (120).

8. The assembly according to one of Claims 1 to 7, **characterized in that** the reinforcing device further includes indexing means (111) of the reinforcing section (100) on the bodywork element (20), said indexing means including an indexing opening and a slot (111) mounted, respectively, on the bodywork element (20) and on the reinforcing section (100) or vice versa, said slot and said opening being designed to coincide.

9. The assembly according to Claim 8, **characterized in that** the reinforcing device further includes detenting means intended to collaborate with the slot (111) and the indexing opening (23).

10. A motor vehicle including an assembly according to one of Claims 1 to 9.

11. The vehicle according to Claim 9, **characterized in that** the bodywork element (20) is a front wing of said vehicle designed to be mounted on a body side (10) of the front hinge pillar.
